Europäisches Patentamt

European Patent Office

Office européen des brevets

(19)

(11) Publication number: **0 113 700**
**A2**

(12) # EUROPEAN PATENT APPLICATION

(21) Application number: **84300120.7**

(22) Date of filing: **09.01.84**

(51) Int. Cl.³: **G 01 N 27/26**

(30) Priority: **08.01.83 JP 1324/83**

(43) Date of publication of application:
**18.07.84 Bulletin 84/29**

(84) Designated Contracting States:
**CH DE FR GB LI SE**

(71) Applicant: **FUJI PHOTO FILM CO., LTD.**
**210 Nakanuma Minami Ashigara-shi**
**Kanagawa 250-01(JP)**

(72) Inventor: **Ogawa, Masashi**
**c/o Fuji Photo Film Co. Ltd. 3-11-46 Senzui**
**Asaka-shi Saitama(JP)**

(72) Inventor: **Shiraishi, Hisashi**
**c/o Fuji Photo Film Co. Ltd. No. 210 Nakanuma**
**Minami-ashigara-shi Kanagawa(JP)**

(74) Representative: **Arthur, Bryan Edward et al,**
**Withers & Rogers 4 Dyer's Buildings Holborn**
**London EC1N 2JT(GB)**

(54) Element for electrophoresis.

(57) An element for electrophoresis comprising a membrane medium for electrophoresis between a cover sheet having a thickness of not more than 50 μm and a support.

**FIG.I**

Croydon Printing Company Ltd.

EP 0 113 700 A2

# ELEMENT FOR ELECTROPHORESIS

## BACKGROUND OF OF THE INVENTION

### Field of the Invention

This invention relates to an element for electrophoresis and particularly to a flat-type (i.e., sheet-type) element for electrophoresis comprising a membrane medium for separation between two sheets. The element for electrophoresis of the invention is easily handled and of value for performing autoradiography.

### Description of prior arts

The electrophoretic analysis using the flat-type element is based on the fact that mobility of substance in an electroconductive flat membrane medium under an applied electric voltage varies with kind of the substance, and is of value in biochemical and medical fields for separation and analysis of a human body-originating substance such as protein or nucleic acid. Especially, the electrophoretic analysis using the flat-type element is of great value in the study on genetic engineering or hereditary disease, because the process for determination of base sequence of DNA generally utilized in said study requires comparison of migration distances among four kinds of base specific cleavege products.

The flat-type element for electrophoresis has been heretofore so constituted that a non-self-supporting gel of polymer such as agarose or polyacrylamide is prepared in the form of membrane (layer) on a single support or between two supports. However, the procedure utilizing the gel membrane formed on a single support requires careful and skillful operations, because the gel membrane is easily broken in the course of formation of the gel membrane, setting of the element in an electrophoresis apparatus, storage thereof, or introduction of a sample into the element. The procedure utilizing the gel membrane sandwitched between two supports likewise requires highly skilled operations, because formation of gel membrane between a vertically arranged mold (constituted with two glass plates, etc.) and a vertical electrophoresis encounter difficulty in the procedure for constituting the mold with uniform thickness and in the introduction of a gel forming solution into a narrow space of the mold before the gelation takes place. Particularly, the gel membrane medium for performing the determination of base sequence of DNA is preferably long so that a single gel membrane medium enables to analyze the cleavage products as many as possible. However, such long gel membrane medium is difficult to produce, or the handling thereof is not easy. Moreover, the glass plates are easily broken.

In the procedure utilizing electrophoresis, an image of separated products is generally visualized through autoradiography after electrophoretic separation of the radioisotopically labeled products. In the autoradiography, the electrophoretic membrane medium carrying the radioisotopically labeled products thereon and a radiographic film are combined in layers in a dark place to imagewise expose the film. In this procedure, the radiographic film is necessarily covered with a water-impermeable thin sheet such as a plastic wrapping sheet so as to keep the film dry. In the case of utilizing a gel medium produced between two glass plates, the imagewise exposing procedure should be performed after removing one glass plate and covering the exposed surface of the medium with the thin sheet, because the glass plate absorbs not a little amount of the radiation emitted by the isotope bound to the cleavage products on the medium, whereby the amount of radiation received by the film is extremely reduced. In the course of performing this procedure, the gel is liable to be broken, for instance, due to inadvertent handling or through adhesion of a portion of the gel medium to the plate under removal. For this reason, the removal of glass plate requires a trained skill.

Moreover, the procedure of covering with a thin sheet such as a plastic wrapping sheet is liable to introduce foams between the gel surface and the sheet or to crease or destroyitself. Therefore, the contact between the gel medium and the film is made uneven to give an obscure autoradiographic image, and then the resolution is made lower.

## SUMMARY OF THE INVENTION

A primary object of the present invention is to provide a flat-type element for electrophoresis which is easily handled and free from the above-described drawbacks.

Another object of the invention is to provide a flat-type element for electrophoresis substantially free from breakage of the membrane medium in the electrophoretic operation.

A further object of the invention is to provide a flat-type element for electrophoresis which is easily handled in a recording procedure of the electrophoretic pattern, particulraly, in the procedure for exposure to radiation.

The present invention provides an element for electrophoresis comprising a membrane medium for electrophoresis between a cover sheet and a support, comprising an improvement in which the cover sheet has a thickness of not more than 50 μm.

The element for electrophoresis according to the present invention has advantageous features, that is, the handling is easy and substantially no breakage of the membrane medium takes place in the course of the electrophoretic process. These advantageous features are particularly favorable in the use of gel membrane as the membrane medium, but are still favorable in the use of a self-supporting membrane medium such as a microporous cellulose acetate membrane containing continuous pore phase, or a filter paper.

## BRIEF DESCRIPTION OF DRAWINGS

Fig. 1 is a schematic section view of an element for electrophoresis of an embodiment of the present invention.

Fig. 2 is a schematic plane view of another element for electrophoresis of an embodiment of the invention.

Fig. 3 is a schematic plane view of a further element for electrophoresis of an embodiment of the invention, in combination with a schematic section view thereof.

Fig. 4 and Fig. 5 are schematic plane views of still further elements for electrophoresis of embodiments of the invention, in combination with respective schematic plane views.

1: cover sheet, 2: membrane medium for electrophoresis, 3: support, 4: slot for introduction or spotting of sample, 5a, 5b: spacer, 6a, 6b: sealed portion, 7: groove for introduction or spotting sample, $D^1$: thickness of cover sheet, $D^2$: thickness of membrane medium for electrophoresis, $D^3$: thickness of support, $L^1$: width of membrane medium for electrophoresis, $L^2$: width of spacer, $L^3$: width of sealed portion, $L^4$: length of membrane medium for electrophoresis.

## DETAILED DESCRIPTION OF THE INVENTION

The present invention will be described in more detail by referring to preferable embodiments thereof, but these embodiments are by no means understood to restrict the invention.

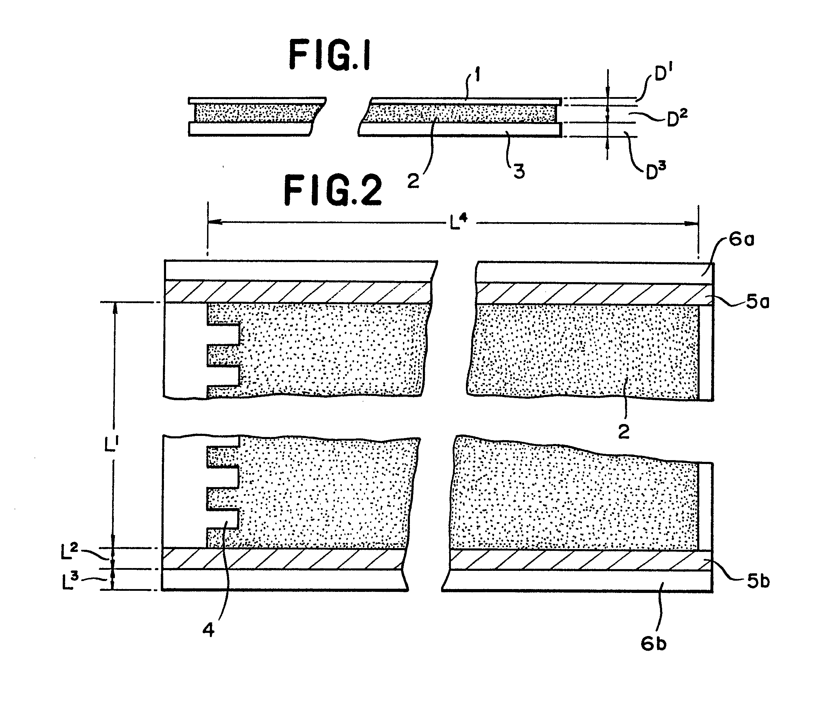

Five embodiments of the element for electrophoresis are illustrated in Fig. 1 to Fig. 5.

One embodiment of the invention comprises a membrane medium for electrophoresis 2 provided between two sheets 1, 3. The upper sheet 1 (referred to herein as cover sheet) has a thickness ($D^1$) as less as possible, so that the autoradiographic exposure through the cover sheet can be efficiently done. According to the present invention, the thickness of the cover sheet is not more than approx. 50 μm, more preferably approx. 3 - 50 μm, particularly preferably approx. 5 - 40 μm. The thickness ($D^3$) of the lower sheet 3 (referred to herein as support) may be the same as or different from that of the cover sheet and generally ranges from approx. 5 μm

- 6 -      0113700

to approx. 5 mm, preferably from approx. 8 µm to approx. 3 mm.  The support is preferable to be thicker and stiffer than the cover sheet.

There is no specific limitation on the material of either of the cover sheet 1 and support 3, as far as the it is a non-electroconductive and substantially water-impermeable sheet with smooth surface.  Examples of the material include a polyester such as polyethyleneterephthalate or polycarbonate of bisphenol A, a vinyl-type polymer such as poly(methyl methacrylate), polyethylene, polystyrene or poly(vinyl chloride), a polyamide such as nylon, and copolymers of these monomers such as vinylidene chloride - vinyl chloride copolymer.  The material of the cover sheet 1 may be the same as or different from that of the support 3.

There is no specific limitation on the membrane medium for electrophoresis 2, as far as it can be employed for electrophoretic separation.  Examples of the medium include aqueous polyacrylamide gel, agarose gel, starch gel, agar gel, porous cellulose acetate membrane, and filter paper.

The thickness ($D^2$) of the membrane medium can be chosen depending upon the purpose of the separation, and generally ranges from approx. 50 µm to approx. 10 mm. The gel membrane medium preferably ranges from approx. 200 µm to approx. 5 mm, while the porous membrane and filter paper preferably ranges from approx. 70 µm to approx. 1 mm.  The size of the membrane medium ($L^1 \times L^4$) as shown in Fig. 2 may be optically chosen.  In the gel membrane medium for determination of base sequence of DNA, $L^1$ and $L^4$ preferably are in the ranges of 20 - 40 cm and 30 - 60 cm, respectively.

- 7 -    0113700

As shown in Fig. 2, the support 3 and cover sheet 1 are preferably sealed at both side ends (6a, 6b). There is no specific limitation on the width of the sealed portion ($L^3$), as far as both are at least combined by the sealed portion. Generally, $L^3$ is in the range of 2 - 20 mm. Alternatively, the support and cover sheet can be combined under adhesion via a spacer mentioned hereinafter. Other two side ends of the support and cover sheet can be sealed or allowed open.

On outer sides of both side ends of the membrane medium are preferably provided spacers (5a, 5b) for keeping the thickness of the medium, as well as for protecting the medium. The spacers are preferably fixed under adhesion to the support or molded with the support in one piece. A mold processing can be utilized to produce the one-piece product of the support and spacers. The thickness of the spacer does not exceed the thickness of the membrane medium 2 ($D^2$) and the width of the spacer ($L^2$) preferably in the range of 5 - 20 mm.

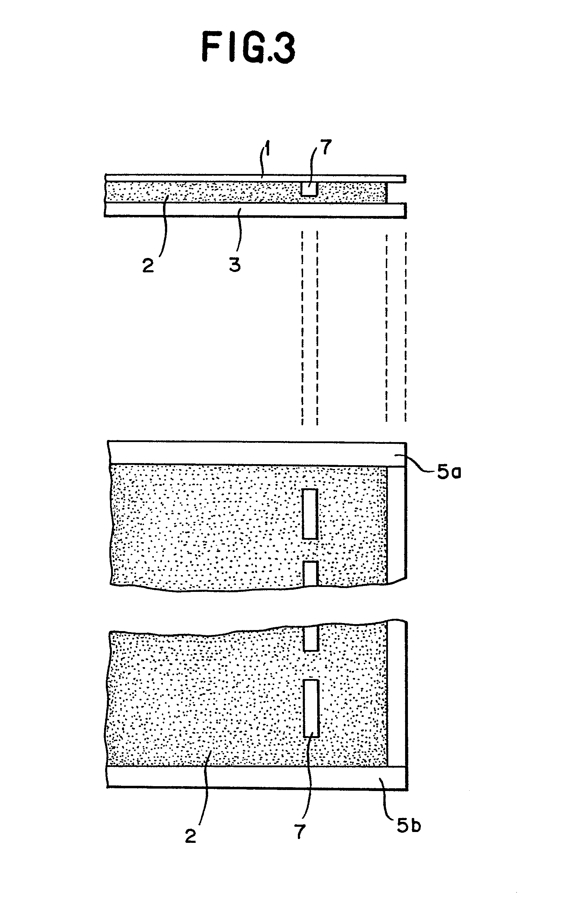

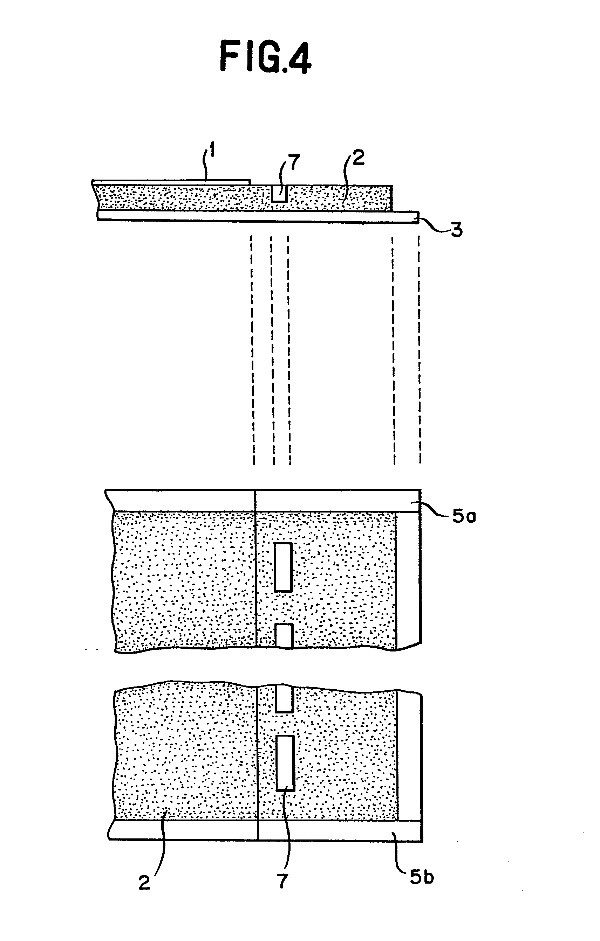

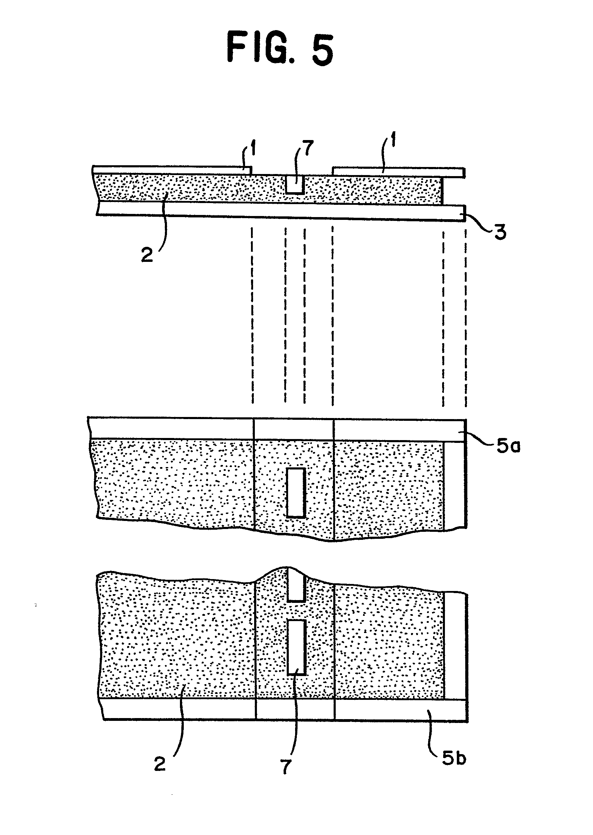

In one end portion of the membrane medium, a slot 4 for introduction or spotting of a sample in the vertical electrophoresis (shown in Fig. 2) or a groove 7 for introduction or spotting of a sample in the horizontal electrophoresis (shown in Fig. 3 to Fig. 5) is preferably provided. In the membrane medium provided with the slot 4, all portion of the slot 4 may be covered with the cover sheet. Otherwise, only a portion nearer to the electrophoretic separation area (namely, right side of the slot in Fig. 2) may be covered with the cover sheet 1 for keeping an introduced sample therein, while other portion may be allowed exposed. In the membrane medium provided with the groove 7, the groove 7 may be covered with the cover sheet 1 (shown in Fig. 3) or allowed open (shown in Fig. 4 and Fig. 5). The groove is preferably not covered with the cover sheet, as shown in Fig. 4 and Fig. 5. Otherwise, the groove preferably is so covered with a portion of the cover sheet that said portion can be removed to expose the groove.

The element for electrophoresis as described above referring to the embodiments are substantially free from breakage of the membrane medium caused by contact with other articles or direct handling of the membrane medium as such, because the cover sheet covers the membrane medium all the time from the formation of the medium until the autoradiographic process. Accordingly, the element for electrophoresis of the invention is handled more easily than the conventional element for electrophoresis. Moreover, the element of the invention is advantageous in that a sample inadvertently dropped on an area other than the slot or groove in the procedure for introduction of a sample can be easily wiped off.

The element for electrophoresis according to the invention is also advantageous in that the element can be combined in layers with a radiographic film without removal of the cover sheet after electrophoreis for performing the autoradiographic process. Thus, the autoradiography utilizing the element of the invention is free from one complicated procedure of removing the cover sheet, which is necessary in the conventional autoradiography. This means that the autoradiographic process can be performed with less failure. The autoradiographic exposing process needs a long period of time. If one autoradiographic process is not performed successfully due to the above-described troubles, the subsequent another trial needs a longer period due to decay of the radioisotope.

For the reasons as described above, the element for electrophoresis of the invention serves for shortening the period for the autoradiographic process through the simplification of the procedure. Moreover, the element of the invention is advantageous in that the element is in the form of a sheet, whereby requiring no large space and being able to be piled up.

The preparation of the element for electrophoresis of the invention can be done, for instance, by placing a gel forming solution on a horizontally held support by a known method such as coating or casting and laminating a cover sheet over the solution layer before or after gelation by means of a roller or spatula. The surface of either the cover sheet and support is preferably processed to make hydrophilic by a known process such as ultraviolet ray irradiation, glow discharge processing, corona discharge processing, electron beam irradiation, flame processing, chemical etching, electrolytic etching, etc.

Otherwise, the element of the invention can be prepared by introducing a gel forming solution into a mold made of two glass plates, each carrying the sheet on the inner surface thereof, so as to causing gelation therein.

The element of the invention can be sealed by heating at appropriate portions along the periphery of the gel membrane medium so as to prevent evaporation of water contained in the medium. The element for electrophoresis is preferably kept in an envelop of vapor-impermeable sheet.

The present invention is further illutstrated by the following examples, but these examples are by no means understood to restrict the invention.

## EXAMPLE

Three spacers of poly(methyl methacrylate) in the form of strips (thickness: 0.5 mm) were placed on three side ends of polyethylene terephthalate film (support; thickness 100 μm; the surface being made hydrophilic by applying thereto high freequency discharge) spread on a horizontally installed plate. The remaining end was provided with a space by placing thereon a slot former (the thickness was the same as that of the spacer) having a crenellated side. Into the space, a mixture of an aqueous gel forming solution (a tris - boric acid buffer solution containing 12.5 % of acrylamide in which 5 % of methylenebisacrylamide was contained) and an appropriate amount of initiator (ammonium persulfate and tetramethylethylenediamine) was poured.

A glass plate carrying polyethylene terephthalate film (cover sheet; thickness 20 μm) thereon under adhesion was placed under pressure on the gel forming solution layer to remove an excessive solution. The glass plate was kept thereon under pressure for performing gelation, and only the glass plate was removed to prepare an element for electrophoresis comprising a membrane medium between the two polyethylene terephthalate sheets.

Plasmid PBR 322 of E. coli labeled with $^{32}P$ was decomposed according to Maxam-Gilbert method (MG method) to prepare base specific cleavage products.

The cleavage products were subjected to electrophoresis by means of an element of gel membrane medium prepared in the conventional molding method using glass plates or the element of the invention as prepared above. Subsequently, the autoradiographic process was applied to these elements to give a visualized autoradiograph for each.

Both autoradiographs indicated almost same resolution. However, the time required since the termination of electrophoretic separation until the imagewise exposing procedure including the procedure for wiping off the electrolitic solution on the end of the gel membrane medium was approx. 2 min. for the element of the invention. In contrast, the time required for the same procedure in the case of using the conventional element including removal of the glass plate and covering the medium with a wrapping sheet for combining with a radiographic film was as long as 30 min. Further, the latter case required careful handling.

- 1 -                    0113700

CLAIMS:

1.    In an element for electrophoresis comprising a membrane medium for electrophoresis between a cover sheet and a support, the improvement in which the cover sheet has a thickness of not more than 50 µm.

2.    The element for electrophoresis as claimed in claim 1, in which the thickness of said cover sheet ranges from 3 to 50 µm.

3.    The element for electrophoresis as claimed in claim 1, in which the thickness of said cover sheet ranges from 5 to 40 µm.

4.    The element for electrophoresis as claimed in claim 1, in which said medium is a gel membrane medium.

5.    The element for electrophoresis as claimed in claim 1, in which said support and cover sheet are both made of non-electroconductive, water-impermeable material.

6.    The element for electrophoresis as claimed in claim 5, in which either of said support and cover sheet has a hydrophilic surface on at least a side in contact with the membrane medium.

7.    The element for electrophoresis as claimed in claim 1, in which said support and cover sheet are sealed each other under adhesion at least at two corresponding side ends.

- 2 -

0113700

8. The element for electrophoresis as claimed in claim 7, in which a spacer having a thickness of not exceeding the thickness of the membrane medium is provided inside of the sealed end.

9. The element for electrophoresis as claimed in claim 8, in which said spacer is attached under adhesion to at least said support.

10. The element for electrophoresis as claimed in claim 8, in which said spacer and suppurt are molded into one piece.

11. The element for electrophoresis as claimed in claim 1, in which said membrane medium has at least one slot for introduction of a sample at one end thereof.

12. The element for electrophoresis as claimed in claim 11, in which said slot is covered with the cover sheet.

13. The element for electrophoresis as claimed in claim 11, in which said slot is covered with the cover sheet at a portion nearer to the electrophoretic separation area and other portion thereof is exposed with no covering of the cover sheet.

14. The element for electrophoresis as claimed in claim 1, in which a groove for a sample is provided on the membrane medium at a position near to one end thereof.

0113700

15.  The element for electrophoresis as claimed in claim 14, in which said groove is exposed with no covering of the cover sheet.

16.  The element for electrophoresis as claimed in claim 14, in which said groove is so covered with a portion of the cover sheet that said portion can be removed to expose the groove.

17.  The element for electrophoresis as claimed in claim 4, in which said gel membrane medium is produced by gelation of a gel forming solution directly on said support.

# FIG.1

# FIG.2

0113700

FIG.3

# FIG.4

# FIG. 5